# EUROPEAN PATENT SPECIFICATION

(11) **EP 4 131 581 B1**
(45) Date of publication and mention of the grant of the patent: **14.10.2026**
(21) Application number: 22188174.1
(22) Date of filing: 01.08.2022
(51) Int. Cl.: H01M 10/6555, H01M 10/658, H01M 50/593

(54) **THERMAL BLOCKING SHEET**
WÄRMEDÄMMENDE FOLIE
FEUILLE DE BLOCAGE THERMIQUE

(30) Priority: 05.08.2021 EP 21189948
(43) Date of publication of application: 08.02.2023
(73) Proprietor: Illinois Tool Works Inc., Glenview, IL 60025 (US)
(72) Inventor: DE WILDE, Ignatius, Glenview, 60025 (US); WEGMANN, Kevin, Glenview, 60025 (US)
(74) Representative: HGF

(56) References cited:
- WO-A1-2020/054228
- WO-A1-2020/194929
- US-A1- 2019 190 098
- US-A1- 2020 365 853
- US-A1- 2022 158 292

## Description

### TECHNICAL FIELD

This invention relates generally to a thermal blocking sheet for a battery. Particularly, the thermal blocking sheet is for use adjacent to at least one cell, such as between a pair of cells for between a single cell and a battery housing, to limit the spread of excess heat or fire. In certain examples the thermal blocking sheet also resists pressure from cells on either side, due to cell expansion.

### BACKGROUND

It is known that in certain situations a battery may over heat, and possibly catch fire. Lithium-ion batteries are particularly susceptible to this; however the issue may arise with other battery types. Lithium-ion batteries are increasingly being used to power electric road vehicles, and it will be appreciated that in such a situation a large number of cells may be packed into a relatively small volume, which increases the risk of overheating. Known techniques for mitigating this risk of overheating or fire fall essentially into two types. A first type comprises controlling the battery or the cell to avoid the risk of overheating in the first place, for instance by limiting charging current to a battery within acceptable limits. A second type comprises incorporating structures into or around the battery to manage an overheating event, for instance by constraining overheating to a single cell which may then be replaced.

A known battery cell level approach to improve battery safety is to use materials with intrinsically better thermal properties in the construction of the cell. This may include flexible ceramic separators within a battery cell to limit the spread of overheating through the cell and to prevent separator failure, which could lead to an uncontrolled cell overheating event.

A known battery module level approach is to design battery modules so that it is difficult for heat to be transferred between the cells. This can include having open space between the cells (for instance around 1.4 mm, which also accommodates typical cell expansion), using heat shields or insulators (such as Formex or a mica layer), cooling plates, heat conductors and flame-retardant barriers.

A known battery pack level approach is to apply similar techniques noted above for the battery module to the whole battery pack, for instance heat transfer barriers between modules, strategic vents in the battery pack wall and having dedicated cooling systems. A large battery system can be divided into several smaller packs that are thermally isolated from one another, which guards against the risk of large-scale thermal blocking. WO2020194929A1 discloses a separator for insulating adjacent battery cells and power supply device. US2020365853A1 discloses a power supply device, and electric vehicle and power storage device provided with said power supply device. WO2020054228A1 discloses a power supply device.

Despite considerable research into the fire risk for lithium-ion batteries, the problem has not been fully resolved and fires continue to occur, risking harm to vehicle occupants when the batteries power an electric vehicle, along with property damage.

Furthermore, in certain situations a battery cell may expand. This may occur through use or with age of the battery cell, and normally is undesirable. For a lithium-ion cell, as it ages, gas can be created (referred to as outgassing) causing the cell to expand if there is no outlet for the gas. Excessive expansion may physically damage the cell or adjacent cells or other structures. It may also lead to the cell overheating or catching fire.

It is an aim of certain examples of the present invention to provide an improved technique for guarding against the risk of fire or uncontrolled overheating for a battery. A further aim is to mitigate the effects of cell expansion in a battery.

### BRIEF SUMMARY OF THE INVENTION

The invention is defined in the claims. According to a first aspect of the present invention there is provided a thermal blocking sheet as defined in claim 1.

According to a second aspect of the present invention there is provided a battery comprising: a plurality of cells; and a thermal blocking sheet according to any one of the preceding claims between a pair of cells.

According to a third aspect of the present invention there is provided a method of manufacturing a thermal blocking sheet as defined in claim 6.

An advantage of examples of the present invention is that the thermal blocking sheet limits the spread of heat while also resisting external pressure. In one example, the thermal blocking sheet is used to limit the spread of heat between battery cells and to resist cell expansion from the cells on either side. Advantageously, the different functions of pressure resistance and thermal insulation are provided by different portions of the thermal blocking sheet, which permits optimal materials to be selected for each role. Additionally, selection of the relative size of each part of the sheet (along with material selection) allows fine control over the thermal insulation and pressure resistance provided.

For the avoidance of doubt, any of the features described herein apply equally to any aspect of the invention.

### BRIEF DESCRIPTION OF THE DRAWINGS

Embodiments of the invention will now be described by way of example only with reference to the accompanying drawings in which:
Figure 1 is a perspective view of a battery including battery cells and thermal blocking sheets according to an example of the present invention positioned between the cells; and
Figure 2 is an exploded perspective view of a thermal blocking sheet according to an example of the present invention.

### DETAILED DESCRIPTION

Examples of the present invention relate to a thermal blocking sheet, a battery including a thermal blocking sheet adjacent to at least one cell and a method of manufacturing a thermal blocking sheet.

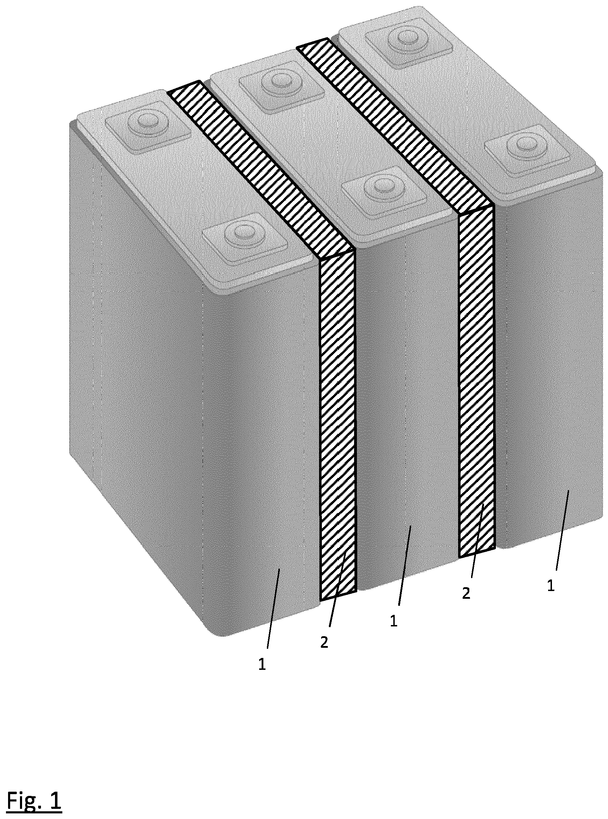

Referring to figure 1, this illustrates a battery or a battery module comprising three cells 1. It will be understood that the choice of three cells 1 is arbitrary and there may be two or more cells 1. The cells 1 are illustrated as prismatic battery cells. Prismatic cells have the advantage that their shape permits cells to be tightly packed into a battery module, however the present invention is not limited to prismatic cells or any particular cell form. Between each pair of cells 1 there is provided a thermal blocking sheet 2. The battery of figure 1 may be part of an electrical vehicle. Or it may be domestic, commercial or industrial battery, for instance part of a home appliance. The present invention is not limited to any particular application for the battery.

The term "sheet" should not be used to infer any dimensions: it may be provided in the form of a roll of tape. In figure 1 the thermal blocking sheet 2 extends across the full facing areas of adjacent cells 1 though it may be larger or smaller than the adjacent cells 1. Clearly where different forms of cells are used the size and shape of thermal blocking sheet will also vary. In other examples the thermal blocking sheet 2 may be located with a cell only on one side, for instance between a cell and a battery housing,

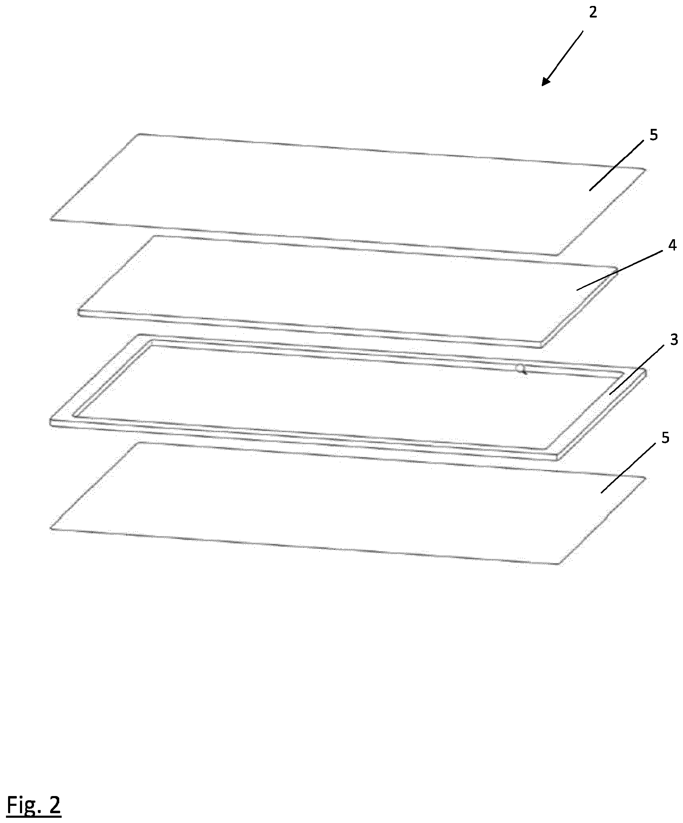

Figure 2 is an exploded perspective view of a thermal blocking sheet 2. The thermal blocking sheet 2 comprises two different parts, each optimised to perform a different role. The first part is a frame 3. The primary function of the frame 3 is to resist pressure from one or both sides of the sheet 2 (above and below in figure 2, or from at least one adjacent cell 1 in figure 1). That is, the material used to form frame 3 is selected to resist compression. The frame 3 in figure 2 is illustrated as a continuous O-shaped band around the outside of sheet 2, for instance in use extending about the periphery of the cells 1. Frame 3 may be cut from a continuous sheet of material. However, it will be appreciated that in alternative examples the frame 3 may be cut from separate strips forming frame elements that meet or approach each other at the corners of sheet 2 in order to be less wasteful of material. The term frame element should be understood to include any section or piece of the frame regardless of whether it is separately formed or a continuation of an adjacent frame element. In other examples the frame 3 may be spaced apart from the periphery of the sheet 2. Additionally, or alternatively, one or more frame elements may be provided in the form of intermediate ribs within an internal portion of the sheet 2. The frame elements may in some examples form a grid or matrix defining cells therebetween. The number of frame elements, their location and their dimensions may be selected to control the portions of sheet 2 where pressure resistance is provided and indeed the amount of pressure that the sheet 2 can resist. For example, the sheet of figure 2 may primarily provide pressure resistance about the periphery of the sheet, which may correspond to the periphery of battery cells. In other examples, pressure resistance may also be required in central portions. It will be appreciated that this is infinitely configurable, and that the cumulative pressure resistance afforded by the sheet 2 may be a function of the total surface area of frame 3 in the plane of the sheet 2 and the material from which the frame 3 is made.

In normal operating conditions within a battery, the thermal blocking sheet 2 may be required to resist pressure from an adjacent cell in a range of 1 kN to 4 kN. It will be understood that as cells expand the pressure may exceed 10 kN. The required pressure resistance is a parameter to be selected in order to specify a particular thermal blocking sheet 2.

Sheet 3 further comprises thermal insulation 4. Thermal insulation 4 is provided as a sheet that fits within frame 3. Where the frame 3 has a different shape, for instance the inclusion of an intermediate rib, it will be appreciated that the thermal insulation 4 may be provided in multiple portions. In some examples the frame 3 and thermal insulation 4 are contiguous and define the full area of the sheet 2. The primary function of the thermal insulation 4 is to provide thermal resistance, for instance to allow the sheet 2 to withstand a temperature gradient across the sheet 2 for a predetermined period of time. That is, there may be no constraint on material selection for the thermal insulation 4 to also resist crushing pressure. An example would be a requirement for the sheet to withstand a temperature differential across the sheet 2 of 150 °C for 350 s. The material used to form thermal insulation 4 is selected to provide this temperature resistance. Appropriate selection of the thermal insulation material, together with its dimensions including thickness, and the proportion of sheet 2 covered by thermal insulation 4 allows for the temperature resistance to be provided for substantially any specification.

It will be appreciated that according to examples of the present invention the different materials used may be selected separately from one another according to their required properties. As an example, a suitable thermal insulation material may be selected without the need to consider its ability to resist compression as that is provided separately by the frame. Considerable flexibility is provided to configure a thermal blocking sheet 2 with required properties according to selection of the respective materials, their locations within the sheet, the respective proportions of the overall sheet afforded to each material and the thickness of each material.

In some examples, it is possible to select a thermal insulation material that is cheaper than would be required if it was also required to resist compression. The thermal insulation material is fibrous. In some examples of the present invention, as illustrated in figure 2, the thermal blocking sheet 2 further comprises top and bottom layers of film 5 to contain the thermal insulation 4. The film adheres to or otherwise seals to frame 3 about the thermal insulation 4. The film layers 5 serve to contain the thermal insulation 4 within the frame 3. The film 5 improves the handling properties of the insulation material. Even where the thermal insulation 4 is not liable to shed debris, the film layers 5 serve to hold the frame 3 and the thermal insulation 4 together such that the sheet 2 may be used a single component. In the invention at least one film layer 5 has an outer adhesive tape, for instance it may be a double-sided sticky tape, in order to apply the sheet 2 to a battery cell.

Suitably, the frame 3 is formed from an elastomeric foam, for instance polyurethane. Suitably the thermal insulation 4 may comprise ceramics, silica-based fleeces, graphite or any other known insulation material. Suitably the film 5 may comprise a plastic or metal film. Film 5 may be flexible. The performance constraints on film 5 are less onerous that for frame 3 and thermal insulation 4 given that its primary function is to seal to frame 3 to contain the thermal insulation 4, which allows for a free choice of suitable materials. The person skilled in the art of thermal insulation, particularly for batteries, will be aware of numerous suitable materials for each part of the thermal blocking sheet 2, the selection of materials being a factor of the required pressure resistance and thermal insulation, available dimensions and cost.

The reader's attention is directed to all papers and documents which are filed concurrently with or previous to this specification in connection with this application and which are open to public inspection with this specification.

## Claims

1. A thermal blocking sheet (2) for a battery, the thermal blocking sheet (2) comprising:
a frame (3) comprising one or more frame elements configured to resist compression of the sheet;
fibrous thermal insulation (4) located within the frame (3);
first and second film layers (5) sandwiching the frame (3) and the fibrous thermal insulation (4) therebetween, wherein the first and second film layers (5) are sealed by adhering, or otherwise, to the frame (3) to contain the fibrous thermal insulation (4) within the frame (3); wherein
at least one film layer, of the first and second film layers (5), comprises an adhesive tape permitting the sheet to be attached to another component; and
wherein the frame is formed from an elastomeric foam.

2. The thermal blocking sheet (2) of claim 1, wherein the frame (3) extends around the periphery of the sheet; or
wherein the frame (3) includes at least one intermediate rib.

3. A battery comprising:
a plurality of cells (1); and
a thermal blocking sheet (2) according to any one of the preceding claims adjacent to at least one battery cell, wherein the frame (3) is configured to resist expansion of an adjacent battery cell.

4. A battery according to claim 3, wherein the thermal blocking sheet (2) is positioned between a pair of battery cells (1).

5. An electrical vehicle comprising a battery according to claim 3 or claim 4.

6. A method of manufacturing a thermal blocking sheet (2) for a battery, the method comprising:
forming a frame (3) from an elastomeric foam, the frame comprising one or more frame elements configured to resist compression of the sheet;
disposing fibrous thermal insulation (4) within the frame (3);
sandwiching the frame (3) and the fibrous thermal insulation (4) between first second film layers (5), thereby sealing, by adhering, or otherwise, the first and second film layers (5) to the frame (3) to contain the fibrous thermal insulation (4) within the frame (3); and
adhering the sheet to another component using an adhesive tape located on at least one film layer, of the first and second film layers (5).

## Patentansprüche

1. Wärmedämmende Schicht (2) für eine Batterie, wobei die wärmedämmende Schicht (2) Folgendes aufweist:
einen Rahmen (3), der ein oder mehrere Rahmenelemente aufweist, die so konfiguriert sind, dass sie einer Kompression der Schicht standhalten;
faserige Wärmeisolierung (4), die innerhalb des Rahmens (3) angeordnet ist;
erste und zweite Folienschichten (5), die den Rahmen (3) und die faserige Wärmeisolierung (4) dazwischen sandwichartig einschließen, wobei die ersten und zweiten Folienschichten (5) durch Kleben oder auf andere Weise mit dem Rahmen (3) versiegelt sind, um die faserige Wärmeisolierung (4) innerhalb des Rahmens (3) zu enthalten; wobei
mindestens eine Folienschicht der ersten und zweiten Folienschicht (5) ein Klebeband aufweist, das die Befestigung der Schicht an einer anderen Komponente ermöglicht; und
wobei der Rahmen aus einem elastomeren Schaum gebildet ist.

2. Wärmedämmende Schicht (2) nach Anspruch 1, wobei sich der Rahmen (3) um den Umfang der Schicht erstreckt; oder
wobei der Rahmen (3) mindestens eine Zwischenrippe umfasst.

3. Batterie, aufweisend:
eine Mehrzahl von Zellen (1); und
eine wärmedämmende Schicht (2) nach einem der vorhergehenden Ansprüche, die an mindestens eine Batteriezelle angrenzt, wobei der Rahmen (3) so konfiguriert ist, dass er einer Ausdehnung einer benachbarten Batteriezelle standhält.

4. Batterie nach Anspruch 3, wobei die wärmedämmende Schicht (2) zwischen einem Paar von Batteriezellen (1) angeordnet ist.

5. Elektrofahrzeug, das eine Batterie nach Anspruch 3 oder Anspruch 4 aufweist.

6. Verfahren zum Herstellen einer wärmedämmenden Schicht (2) für eine Batterie, das Verfahren aufweisend:
Bilden eines Rahmens (3) aus einem Elastomerschaum, wobei der Rahmen ein oder mehrere Rahmenelemente aufweist, die so konfiguriert sind, dass sie einer Kompression der Schicht standhalten;
Anordnen einer faserigen Wärmeisolierung (4) innerhalb des Rahmens (3);
sandwichartiges Anordnen des Rahmens (3) und der faserigen Wärmeisolierung (4) zwischen der ersten und zweiten Folienschicht (5), wodurch die erste und zweite Folienschicht (5) an den Rahmen (3) angeklebt oder anderweitig versiegelt werden, um die faserige Wärmeisolierung (4) innerhalb des Rahmens (3) zu enthalten; und
Verkleben der Schicht mit einem anderen Bauteil unter Verwendung eines Klebebands, das auf mindestens einer der ersten und zweiten Folienschicht (5) angeordnet ist.

## Revendications

1. Feuille de blocage thermique (2) pour une batterie, la feuille de blocage thermique (2) comprenant :
un cadre (3) comprenant un ou plusieurs éléments de cadre configurés pour résister à la compression de la feuille ;
un isolant thermique fibreux (4) situé au sein du cadre (3) ;
des première et deuxième couches de film (5) prenant en sandwich le cadre (3) et l'isolant thermique fibreux (4) entre elles, dans laquelle les première et deuxième couches de film (5) sont scellées par collage, ou autrement, au cadre (3) pour contenir l'isolant thermique fibreux (4) au sein du cadre (3) ; dans laquelle
au moins une couche de film, parmi les première et deuxième couches de film (5), comprend un ruban adhésif permettant à la feuille d'être fixée à un autre composant ; et
dans laquelle le cadre est formé à partir d'une mousse élastomère.

2. Feuille de blocage thermique (2) selon la revendication 1, dans laquelle le cadre (3) s'étend autour de la périphérie de la feuille ; ou
dans laquelle le cadre (3) comporte au moins une nervure intermédiaire.

3. Batterie comprenant :
une pluralité de cellules (1) ; et
une feuille de blocage thermique (2) selon l'une quelconque des revendications précédentes adjacente à au moins une cellule de batterie, dans laquelle le cadre (3) est configuré pour résister à la dilatation d'une cellule de batterie adjacente.

4. Batterie selon la revendication 3, dans laquelle la feuille de blocage thermique (2) est positionnée entre une paire de cellules de batterie (1).

5. Véhicule électrique comprenant une batterie selon la revendication 3 ou la revendication 4.

6. Procédé de fabrication d'une feuille de blocage thermique (2) pour une batterie, le procédé comprenant :
la formation d'un cadre (3) à partir d'une mousse élastomère, le cadre comprenant un ou plusieurs éléments de cadre configurés pour résister à la compression de la feuille ;
la mise en place d'un isolant thermique fibreux (4) au sein du cadre (3) ;
la prise en sandwich du cadre (3) et de l'isolant thermique fibreux (4) entre les première et deuxième couches de film (5), scellant ainsi, par collage, ou autrement, les première et deuxième couches de film (5) au cadre (3) pour contenir l'isolant thermique fibreux (4) au sein du cadre (3) ; et
le collage de la feuille à un autre composant à l'aide d'un ruban adhésif situé sur au moins une couche de film, parmi les première et deuxième couches de film (5).
